# EUROPÄISCHE PATENTSCHRIFT

(11) **EP 0 610 547 B1**
(45) Veröffentlichungstag und Bekanntmachung des Hinweises auf die Patenterteilung: **04.03.1998**
(21) Anmeldenummer: 93115968.5
(22) Anmeldetag: 04.10.1993
(51) Int. Cl.: G11B 33/04, A47B 81/06

(54) **Ständer zum Aufbewahren von Gegenständen**
Rack for stocking of objects
Casier pour le stockage d'objets

(30) Priorität: 09.02.1993 DE 4303698
(43) Veröffentlichungstag der Anmeldung: 17.08.1994
(73) Patentinhaber: Müller, Frank, D-76185 Karlsruhe (DE)
(72) Erfinder: Müller, Frank, D-76185 Karlsruhe (DE)
(74) Vertreter: Lemcke, Rupert, Dipl.-Ing.

(56) Entgegenhaltungen:
- DE-C- 732 697
- DE-U- 8 910 971
- DE-U- 9 107 752
- US-A- 2 825 465

## Beschreibung

Die Erfindung betrifft einen Stander zum Aufbewahren von flacnen, quaderförmigen Gegenständen, insbesondere Hüllen von Informationsträgern wie Compactdisketten, Musikkassetten oder VideoKassetcen, mit zwei einen Winkel zwischen sich einschließenden, der Fachbildung wenigstens dienlichen Seitenwandteilen, durch die die Gegenstände seitlich gehalten sind.

Häufig sind solche Ständer zum Aufbewahren von Gegenständen, insbesondere von Compactdisks (CDs), von denen nachfolgend der Einfachheit halber nur noch gesprochen wird, in der Form eines Turms aufgebaut, bei dem diese Gegenstande norizontal parallel übereinander gestapelt werden.

Ein Turm dieser Art ist aus dem deutschen Gebrauchsmuster G 91 03 216 bekannt und weist zwei sich vertikal erstreckende Seitenwände mit einer Vielzahl von Aufnahmeöffnungen auf, die im spitzen Winkel zueinander angeordnet sind. Meist bestehen die Seitenwände aus Blech, weshalb die Aufnanmeöffnungen durch Stanzen gebildet werden. Dieser recht aufwendige Produktionsvorgang verursacht jedoch recht scharfkantige Aufnahmeöffnungen, wodurch die abgelegten Gegenstände, also zum Beispiel die CD-Hüllen verkratzt werden. Können die Aufnahmeöffnungen nicht durch Stanzen hergestellt werden, so gestaltet sich deren Einbringen in die Seitenwände als noch aufwendiger.

Beim Ablegen gelangen die CDs erst kurz vor Erreichen der stabilen Endposition in Eingriff mit den Aufnahmeöffnungen, wodurch sich das Ablegen insbesondere bei bereits belegten Nachbaröffnungen als kompliziert erweist. Das Ablegen wird insbesondere dadurch erschwert, daß die Aufnahmeöffnungen zur Verbesserung einer stabilen Lage auch als seitliche Führungen dienen, wodurch die CDs ohne horizontale Auflage in die nur geringes Spiel aufweisenden Aufnahmeöffnungen eingefädelt werden müssen. Auch die Höhe der Aufnahmeöffnungen weist nur ein geringes Spiel auf, da wegen des außen liegenden Schwerpunktes der CDs die Oberkanten möglichst nahe an der CD-Oberseite angeordnet sein müssen, um ein Herauskippen zu verhindern.

Bei kompakter Anordnung der CDs gestaltet sich auch deren Entnahme als schwierig, da die zu geringen Abstände zwischen den einzelnen CDs ein Angreifen an der Ober- und Unterkante der Schmalseiten nicht zuläßt.

Danach ist es Aufgabe der Erfindung, einen Ständer der eingangs genannten Art so auszubilden, daß eine einfache Fachbildung zwischen den Seitenwandteilen ermöglicht ist und eine Beschädigung der Gegenstände durch Verkratzen nicht mehr gegeben ist.

Diese Aufgabe ist erfindungsgemäß dadurch gelöst, daß die Seitenwandteile die Gegenstände wenigstens im Bereich der Enden einer ihrer Diagonalen durch gegenseitige, seitliche Anlage erfassen bzw. abstützen, daß die dem Gegenstand zugewandten Seiten der Wandteile in einem Winkel größer 90° zueinander angeordnet sind, und daß zwischen den Wandteilen zur Fachbildung sich im wesentlichen horizontal erstreckende Auflagen für die Gegenstände in Form von stabförmigen Elementen angeordnet sind, die geringfügig innerhalb des Bereichs der Diagonalen der zwischen die Wandteile übereck eingesteckten Gegenstände in Richtung auf den Scheitelpunkt des Winkels positioniert sind.

Gemäß der Erfindung weisen die beiden im stumpfen Winkel, insbesondere zwischen 100° und 110°, positionierten Seitenwandteile entgegen dem Stand der Technik keine Aufnahmeöffnungen auf, sondern dienen lediglich zur Befestigung der stabförmigen Auflageelemente und als seitliche Anlagefläche.

Die stabförmigen Auflageelemente, die aufgrund ihrer glatten, kantenlosen Form ein Verkratzen der aufliegenden CDs weitestgehend verhindern, sind parallel übereinander angeordnet und bilden die Einschuböffnungen für die CDs.

Die erfindungsgemäßen Merkmale haben die Wirkung, daß die jeweilige CD-Hülle aus der Horizontalen um eine ihrer Grundflächendiagonalen um ca. 30° geschwenkt und mit ihrer nach unten zeigenden Eckkante voraus entlang ihrer anderen Diagonalen zwischen zwei Auflageelemente geschoben wird. Bereits kurz nachdem sie mit dem unteren der beiden Auflageelemente in Berührung kommt, gleitet sie aufgrund ihrer Schwerkraft von selbst entsprechend ihrem Neigungswinkel nach unten zwischen die Seitenwandteile in den CD-Ständer, wo sie durch Anlage der beiden der nach unten geneigten Eckkante benachbarten Seitenkanten an den Seitenwandteilen und durch gleichzeitige Auflage auf dem unter ihr befindlichen stabförmigen Aufnahmeelement entlang ungefähr ihrer Schwenkdiagonalen eine stabile Position einnimmt.

Der Abstand zwischen dem jeweiligen Befestigungspunkt und dem Scheitelpunkt der beiden Seitenwandteile ist hierbei so festzulegen, daß der Schwerpunkt des zu stapelnden Körpers etwas außerhalb des zwischen dem Scheitelpunkt und den Befestigungspunkten gebildeten Dreiecks liegt, was insbesondere dadurch erreicht wird, daß dieser Abstand am jeweiligen Seitenteil etwas kleiner als die entsprechende anliegende Körperseite ist. Vor allem aber ergibt sich daraus, daß die Auflageelemente jeweils im Bereich der Scnwenkdiagonalen etwas innerhalb in Richtung des Scheitelpunktes angeordnet sind, ein formschlüssiges Halten der CD-Hüllen in ihrer stabilen Position, wodurch ein Hindurchrutschen durch das oben genannte Dreieck verhindert wird.

Der Schwenkwinkel der CD-Hülle in der stabilen Position wird durch den Winkel vorgegeben, den die beiden Seitenwandteile miteinander bilden.

Ein weiterer Vorteil der Erfindung liegt darin, daß die CD-Hüllen durch Schwenken um einen am Seitenwandteil anliegenden nahe einem Befestigungspunkt befindlichen Eckpunkt leicht aus dem CD-Ständer herausgenommen werden können. Die Schwenkbewegung kann in einfacher Weise mit nur einem Finger durch Angreifen am aus dem CD-Ständer herausragenden Eckpunkt erfolgen.

Die Seitenwandteile, die nicht nur als Anlagefläche für die CD-Hüllen, sondern auch als den Verschiebeweg vorgebende Führungsfläche dienen, können sich grundsätzlich ausgehend von den Befestigungspunkten der stabförmigen Auflageelemente an den Seitenwandteilen nur über einen Teilbereich zwischen den Befestigungspunkten und dem gegebenenfalls gedachten Scheitelpunkt der beiden Seitenwandteile erstrecken, was für eine Anlage und Führung der CDs ausreicht.

Gemäß einer weiteren Ausgestaltungsform können aus Gründen der Materialersparnis bzw. des ansprechenden Aussehens die Seitenwandteile aus mehreren Einzelelementen bestehen bzw. teilweise durch lochartige Öffnungen unterbrochen sein, wobei jedoch zumindest die dem zu stapelnden Gegenstand zugewandte Seite des jeweiligen Seitenwandteils eine ebene Anlagefläche bilden muß.

Weisen die Seitenwandteile Bohrungen gemäß einem von unten nach oben verlaufenden Lochraster auf, das dem vertikalen Abstand benachbarter stabförmiger Elemente entspricht, so erlaubt dies das Anbringen der stabförmigen Auflageelemente an verschiedenen Befestigungspositionen, wodurcn Gegenstände unterschiedlicher Höhe abgelegt werden können.

Sind die stabförmigen Auflageelemente aus Stangen oder ähnlichem aufgebaut, so sind die Bohrungen in der Richtung schräg in den Seitenwandteilen anzubringen, in der sich die Stangen erstrecken.

Da sich bei einer solchen Ausführung mit Stangen als stabförmigen Auflageelementen insbesondere bei der Montage Schwierigkeiten ergeben können, ist es besonders vorteilhaft, diese stabförmigen Auflageelemente aus flexiblem Material wie zum Beispiel einem Seil oder Draht zu bilden. Hierdurch ergibt sich eine einfachere Montage, indem ausgehend von einer obersten oder untersten Befestigungsöffnung eines Seitenwandteiles das Seil oder ähnliches in die gegenüberliegende Befestigungsöffnung des anderen Seitenwandteiles eingezogen wird, das Seil von der Rückseite dieses Seitenwandteiles in die direkt darunter liegende Befestigungsöffnung und von dort in die gegenüberliegende Befestigungsöffnung des ersten Seitenwandteiles usw. eingefädelt wird. Dieses einfache Verfahren des Einbringens der Auflageelemente ermöglicht eine zumindest teilweise erfolgende Selbstmontage.

In Folge des einfachen Aufbaus kann der CD-Ständer auch leicht in Möbel eingebracht bzw. nachgerüstet werden, wobei lediglich entsprechend zueinander positionierte Seitenwandteile, Bohrungen für die Befestigungsöffnungen und ein Seil oder ähnliches für die Auflageelemente benötigt werden.

Bestehen gemäß einer weiteren bevorzugten Ausgestaltungsform der Erfindung die stabförmigen Auflageelemente aus einem Material aessen Oberflächenhärte geringer als die Oberflächenhärte des zu stapelnden Gegenstandes ist, also zum Beispiel aus Kunststoff oder Kunststoffbeschichtung, so wird der Gefahr eines Verkratzens der CD-Hüllen noch mehr entgegengewirkt. Dieser Effekt wird insbesondere dadurch verstärkt, daß die Anzahl der Auflagepunkte im Vergleich zu herkömmlichen CD-Ständern minimiert wird.

Weitere Merkmale und Vorteile der Erfindung ergeben sich aus der nachfolgenden Zeichnungsbeschreibung der beiden dargestellten Ausführungsbeispiele; dabei zeigt
- Figur 1: eine Draufsicht auf einen CD-Ständer mit eingelegter CD-Hülle;
- Figur 2: eine Vorderansicht eines CD-Ständers;
- Figur 3: eine perspektivische Seitenansicht des CD-Ständers aus Figur 1; und
- Figur 4: eine Schnittdarstellung entlang der Linie I-I aus Figur 1.

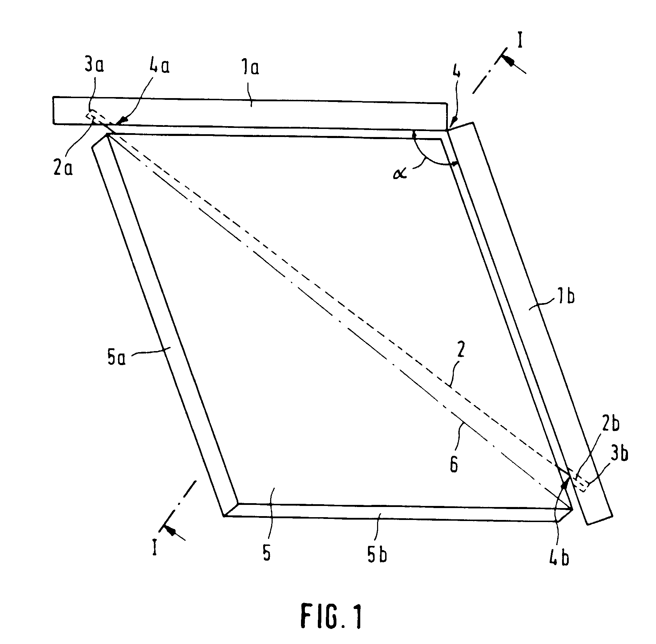

In Figur 1 ist ein CD-Ständer dargestellt, bei dem die sich vertikal erstreckenden Seitenwandteile 1a und 1b zwischen sich einen Minkel α einschließen, der vorzugsweise zwischen 100° und 110° beträgt. Berühren sich die beiden Seitenwandteile 1a und 1b im Scheitelpunkt 4 nicht, so ist dennoch der Winkel α im dann imaginären Scheitelpunkt einzuhalten.

Zwischen den äußeren Enden der beiden Seitenwandteile 1a und 1b erstreckt sich eine Stange 2 zur Fachbildung horizontal, deren Enden 2a und 2b in Bohrungen 3a bzw. 3b an Befestigungspunkten 4a bzw. 4b in den Seitenwandteilen 1a bzw. 1b eingebracht sind. In gleicher Weise sind auch die genau vertikal unter der Stange 2 liegenden weiteren Stangen zur Fachbildung angeordnet. Die Bohrungen 3a und 3b, die als Sacklöcher oder durchgehend ausgebildet sein können, sind in der gleichen Richtung wie die Stange 2 angeordnet. Die Befestigung an den Seitenwandteilen la und 1b erfolgt über zweckmäßige, hier nicht näher erläuterte Befestigungsvorrichtungen.

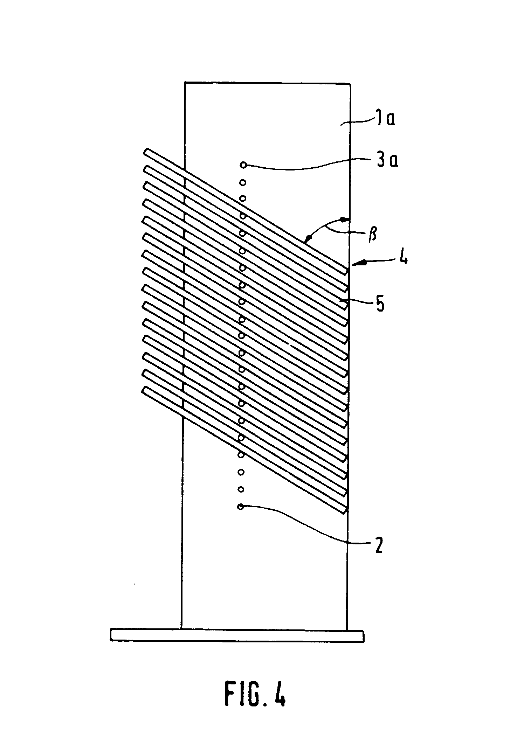

Auf der Stange 2 ist eine CD-Hülle 5 aufgelegt. Da diese CD-Hülle um ihre vom Scheitelwinkel α entfernte Diagonale um einen ca. 30° großen Minkel β (siehe Figur 4) geschwenkt ist, sind die Stirnseiten 5a und 5b der CD-Hülle 5 auch in der Draufsicht erkennbar.

Wie aus Figur 1 zu erkennen ist, liegt die Stange 2 etwas innerhalb einer Diagonalen 6 der CD-Hülle 5 in Richtung auf den Scheitelpunkt 4, wodurch die CD-Hülle 5 formschlüssig in ihrer stabilen Position gehalten wird. Da der jeweilige Abstand zwischen den Befestigungspunkten 4a bzw. 4b und dem Scheitelpunkt kleiner als die jeweilige an den Seitenwandteilen 1a bzw. 1b anliegende Seite der CD-Hülle 5 ist, wird ein Hindurchrutschen der CD-Hülle durch das zwischen 4, 4a und 4b gebildete Dreieck sicher verhindert.

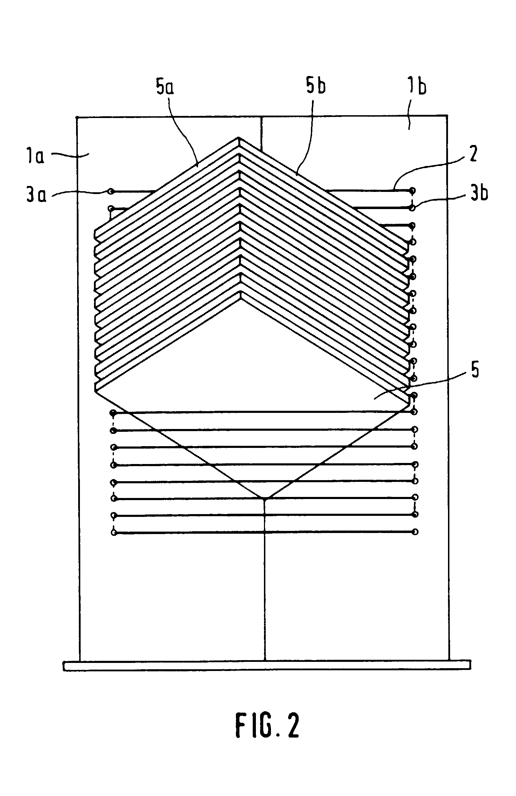

Figur 2 zeigt einen CD-Ständer mit mehreren eingelegten CD-Hüllen in Vorderansicht, bei dem ein zick-zack-förmiges Hin- und Her-Verspannen eines Seiles, zum Beispiel einer Tennissaite, gestrichelt angedeutet ist. Die Bonrungen 3a und 3b sind in diesem Fall zweckmäßigerweise senkrecht durch die Seitenwandteile durchgehend angeordnet. Während das Ende 2b des Seiles 2 mit Hilfe eines nicnt dargestellten Endstückes formschlüssig vom Seitenwandteil 1b gehalten wird, wird das andere Ende 2a über ein sich vertikal nach unten erstreckendes Seilstück in die darunter liegende Bohrung eingeführt, von wo es wieder horizontal zum Seitenwandteil 1b gespannt wird. Nach dem Bilden weiterer stabförmiger Auflageelemente wird schließlich das äußerste Ende des Seiles mit zweckmäßigen Befestigungsmitteln an der untersten Bohrung eines Seitenwandteiles verspannt.

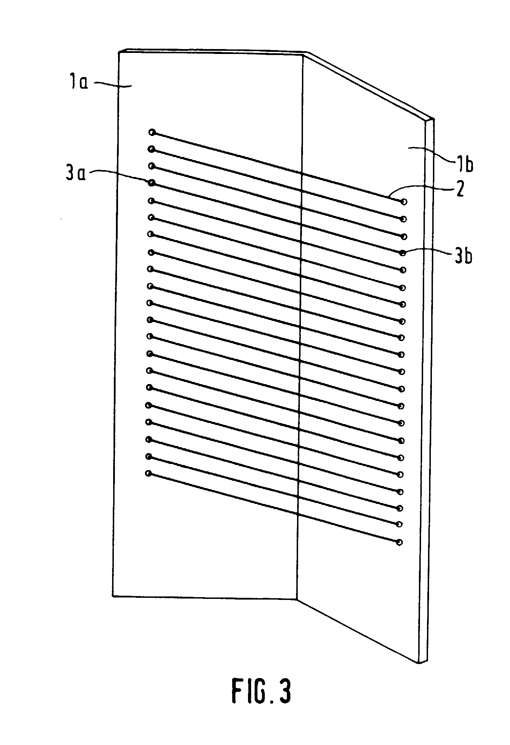

In Figur 3 ist der CD-Ständer aus Figur 1 ohne CD-Hüllen in perspektivischer Seitenansicht dargestellt.

Schließlich zeigt Figur 4 den CD-Ständer aus Figur 1 mit CD-Hüllen in Schnittdarstellung entsprechend der Linie I-I aus Figur 1. Die Schnittebene wurde senkrecht zum Verlauf der Stange 2 gelegt, wodurch sie auch senkrecht zu der Grundfläche der CD-Hüllen 5 liegt. Die rechte Kante des sich aus der Schnittebene nach hinten erstreckenden Seitenwandteiles 1a, auf der gemäß dem vorliegenden Ausführungsbeispiel alle Scheitelpunkte 4 des Scheitelwinkels α liegen, und die CD-Hüllen schließen zwischen sich jeweils den Schwenkwinkel β ein.

Der CD-Ständer kann aus Stabilitätsgründen insbesondere dann mit einer Boden- oder Abdeckplatte versehen werden, wenn sich entsprechend einer Ausführungsform der Erfindung die Seitenwandteile nur über einen Teilbereich zwischen den Befestigungspunkten der Auflageelemente und dem dann gedachten Scheitelpunkt der beiden Seitenwandteile erstrecken.

Sind die beiden Stirnseiten 5a bzw. 5b des zu stapelnden Gegenstandes ungefähr gleichlang, so ist auch eine wechselseitige Anordnung möglich, bei der zum Beispiel die Stirnseite 5a am Seitenwandteil la anliegen würde und die Stirnseite 5b am Seitenwandteil 1b.

Natürlich kann auch ein Seitenwandteil entsprechend einem nicht dargestellten Ausführungsbeispiels auf seinen beiden Seiten, also für zwei CD-Ständer, als Befestigungs- und Anlagefläche dienen.

## Patentansprüche

1. Ständer zum Aufbewahren von flachen, quaderförmigen Gegenständen (5), insbesondere Hüllen von informationsträgern wie Compactdisketten, Musikkassetten oder Videokassetten, mit zwei einen Winkel zwischen sich einschließenden, der Fachbildung wenigstens dienlichen Seitenwandteilen (1a, 1b), durch die die Gegenstände (5) seitlich gehalten sind,
dadurch gekennzeichnet,
daß die Seitenwandteile (1a, 1b) die Gegenstände (5) wenigstens im Bereich der Enden einer ihrer Diagonalen (6) durch gegenseitige, seitliche Anlage erfassen bzw. abstützen, daß die dem Gegenstand zugewandten Seiten der Seitenwandteile in einem Winkel (α) größer 90° zueinander angeordnet sind, und daß zwischen den Seitenwandteilen (1a, 1b) zur Fachbildung sich im wesentlichen horizontal erstreckende Auflagen (2) für die Gegenstände (5) in Form von stabförmigen Elementen angeordnet sind, die geringfügig innerhalb des Bereichs der Diagonalen (6) der zwischen die Seitenwandteile übereck eingesteckten Gegenstande (5) in Ricntung auf den Scheitelpunkt des Winkels (α) positioniert sind.

2. Ständer nach Anspruch 1,
dadurch gekennzeichnet,
daß der Winkel (α), den die beiden Seitenwandteile (1a, 1b) zwischen sich einschließen, zwischen 100° und 110° beträgt.

3. Ständer nach Anspruch 1 oder 2,
dadurch gekennzeichnet,
daß sich die Seitenwandteile (1a, 1b) ausgehend vom Befestigungspunkt (4a, 4b) der Auflagen (2) lediglich über einen Teilbereich zwischen dem Befestigungspunkt (4a, 4b) und dem Scheitelpunkt (4) des zwischen den beiden Seitenwandteilen (1a, 1b) gebildeten Winkels (α) erstrecken.

4. Ständer nach einem der Ansprüche 1 bis 3,
dadurch gekennzeichnet,
daß zumindest die den Gegenständen (5) zugewandten Seiten der Seitenwandteile (1a, 1b) teilweise unterbrochen sind oder aus Einzelelementen bestehen, wobei sie die seitliche Anlage für die Gegenstände (5) bilden.

5. Ständer nach einem der Ansprüche 1 bis 4,
dadurch gekennzeichnet,
daß in den Seitenwandteilen (1a, 1b) zur Aufnahme der stabförmigen Elemente (2) in gleichmäßigen Abständen entsprechend der Höhe der zu stapelnden Gegenstände (5) vertikal ubereinander Befestigungsöffnungen (3a, 3b) angeordnet sind.

6. Ständer nach einem der Ansprüche 1 bis 5,
dadurch gekennzeichnet,
daß die Auflagen (2) in Form von stabförmigen Elementen aus Stangen gebildet sind, die in die Bohrungen (3a, 3b) der Seitenwandteile (1a, 1b) eingesetzt werden und sich zwischen den beiden Seitenwandteilen (1a, 1b) erstrecken.

7. Ständer nach einem der Ansprüche 1 bis 6,
dadurch gekennzeichnet,
daß die stabförmigen Elemente (2), die die Auflagen für die Gegenstände (5) bilden, aus einem Seil, Draht oder ähnlichem bestehen.

8. Ständer nach einem der Ansprüche 1 bis 7,
dadurch gekennzeichnet,
daß bei vollständig die Seitenwandteile (1a, 1b) durchdringender Ausführung der Befestigungsöffnungen (3a, 3b) das Seil (2), Draht oder ähnliches über diese im Zick-Zack hin- und hergehend von oben nach unten bzw. von unten nach oben fortlaufend zur Fachbildung eingefädelt ist.

9. Ständer nach Anspruch 1 bis 8,
dadurch gekennzeichnet,
daß die stabförmigen Elemente (2) vorzugsweise aus Kunststoff bestehen bzw. kunststoffbeschichtet sind, wobei deren Oberflächenhärte geringer als die Härte des zu stapelnden Gegenstandes (5) ist.

## Claims

1. Stand for storing flat, rectangular objects (5), in particular the cases of information carriers such as CDS, music cassettes or video cassettes with two side wall components (1a, 1b) enclosing an angle between themselves and serving at least to form a compartment, in which the objects (5) are held by their sides,
characterized by the fact that the side wall components (1a, 1b) hold and/or support the objects (5) at least in the area of the ends of one of their diagonals (6) with their interdependent, lateral arrangement, that the faces of the side elements turned towards the object are arranged at an angle (α) greater than 90° in relation to each other and that between the side wall elements (1a, 1b) bar-shaped supports (2) for the objects (5) are arranged, extending largely horizontally to form compartments, and within the area of the diagonals (6) of the objects (5) slotted in diagonally between the side wall components the bar-shaped elements are directed slightly towards the vertex of the angle (α).

2. Stand as per claim 1
characterized by the fact that the angle (α) contained between the two side wall components (1a, 1b) lies between 100° and 110°.

3. Stand as per claim 1 or 2,
characterized by the fact that the side wall components (1a, 1b); starting from the fixing point (4a, 4b) of the supports (2) only, extend over part of the area between the fixing point (4a, 4b) and the vertex (4) of the angle (α) formed between the two side wall components (1a, 1b).

4. Stand as per one of claims 1 to 3,
characterized by the fact that at least the faces of the side wall components (1a, 1b) turned towards the objects (5) are partially interrupted or consist of individual elements, whereby they form the lateral rest for the objects (5).

5. Stand as per one of claims 1 to 4,
characterized by the fact that in the side wall components (1a, 1b) to accommodate the bar-shaped elements (2) at equal intervals corresponding to the height ofthe objects (5) to be stacked, fixing apertures (3a, 3b) are arranged vertically, one above the other.

6. Stand as per one of claims 1 to 5,
characterized by the fact that the supports (2) in the form of bar-shaped elements are made of rods which are inserted into the holes (3a, 3b) in the side wall components (1a, 1b) and extend between the two side wall elements (1a, 1b).

7. Stand as per one of claims 1 to 6,
characterized by the fact that the bar-shaped elements (2) which form the supports for the objects (5) are made of a rope, wire or similar.

8. Stand as per one of claims 1 to 7,
characterized by the fact that where the construction of the fixing apertures (3a, 3b) penetrates right through the side wall components (1a, 1b); the rope (2), wire or similar is threaded through them in a zigzag running backwards and forwards continuously from top to bottom or from bottom to top to form compartments.

9. Stand as per claims 1 to 8
characterized by the fact that the bar-shaped elements (2) are preferably made of plastic or coated with plastic, whereby their surface hardness is less than that of the object (5) to be stacked.

## Revendications

1. Support pour le rangement d'objets plats parallélépipédiques (5), notamment de boîtiers de supports d'informations tels que des disques compacts, des cassettes audio ou des cassettes vidéo, avec deux parties de paroi latérales (1a, 1b), formant un angle entre elles et servant au moins à former le casier, par lesquelles les objets (5) sont maintenus latéralement,
**caractérisé** en ce que les parties de paroi latérales (1a, 1b) embrassent ou encore soutiennent les objets (5), par application latérale mutuelle, au moins dans la région des extrémités d'une des diagonales (6) de ces objets, en ce que les côtés des parties de paroi latérales (1a, 1b) qui sont tournés vers l'objet sont disposés en formant entre eux un angle (α) supérieur à 90°, et en ce qu'afin de former le casier, des appuis (2) pour les objets (5), s'étendant sensiblement horizontalement et se présentant sous forme d'éléments du genre barres, sont disposés entre les parties de paroi latérales (1a, 1b), en étant positionnés légèrement à l'intérieur, en direction du sommet de l'angle (α), de la région des diagonales (6) des objets (5) emboîtés en travers entre les parties de paroi latérales.

2. Support selon la revendication 1, **caractérisé** en ce que l'angle (α), que les parties de paroi latérales (1a, 1b) forment entre elles, est compris entre 100° et 110°.

3. Support selon la revendication 1 ou 2, **caractérisé** en ce que les parties de paroi latérales (1a, 1b) ne s'étendent, à partir du point de fixation (4a, 4b) des appuis (2), que sur une région partielle entre le point de fixation (4a, 4b) et le sommet (4) de l'angle (α) formé entre les deux parties de paroi latérales (1a, 1b).

4. Support selon une des revendications 1 à 3, **caractérisé** en ce qu'au moins les côtés des parties de paroi latérales (1a, 1b) qui sont tournés vers les objets (5) sont partiellement interrompus ou sont constitués d'éléments individuels, et ils constituent les faces d'application latérales pour les objets (5).

5. Support selon une des revendications 1 à 4, **caractérisé** en ce qu'afin de recevoir les éléments (2) du genre barres, des ouvertures de fixation (3a, 3b) sont disposées en superposition verticale dans les parties de paroi latérales (1a, 1b), à espacements réguliers correspondant à la hauteur des objets (5) à empiler.

6. Support selon une des revendications 1 à 5, **caractérisé** en ce que les appuis (2) sous forme d'éléments du genre barres consistent en des tiges qui sont insérées dans les perçages (3a, 3b) des parties de paroi latérales (1a, 1b) et qui s'étendent entre les deux parties de paroi latérales (1a, 1b).

7. Support selon une des revendications 1 à 6, **caractérisé** en ce que les éléments (2) du genre barres, qui constituent les appuis pour les objets (5), sont formés à partir d'un câble, d'un fil métallique ou analogue.

8. Support selon une des revendications 1 à 7, **caractérisé** en ce que, avec une exécution des ouvertures de fixation (3a, 3b) traversant totalement les parties de paroi latérales (1a, 1b), le câble (2), fil métallique ou analogue est enfilé à travers ces ouvertures en va-et-vient en zigzag, en progressant de haut en bas ou de bas en haut, afin de former les casiers.

9. Support selon une des revendications 1 à 8, **caractérisé** en ce que les éléments (2) du genre barres sont, de préférence, réalisés en matière plastique ou revêtus de matière plastique, leur dureté de surface étant inférieure à la dureté de l'objet (5) à empiler.
